# EUROPÄISCHE PATENTSCHRIFT

(11) **EP 0 467 176 B1**
(45) Veröffentlichungstag und Bekanntmachung des Hinweises auf die Patenterteilung: **29.09.1993**
(21) Anmeldenummer: 91111275.3
(22) Anmeldetag: 06.07.1991
(51) Int. Cl.: B01J 23/96, B01J 38/64

(54) **Verfahren zur Regenerierung von inaktiven und vergifteten Platinkatalysatoren**
Process for regenerating inactive and poisoned platinum catalyst
Procédé de régénération de catalyseurs de platine inactifs et empoisonnés

(30) Priorität: 18.07.1990 DE 4022852
(43) Veröffentlichungstag der Anmeldung: 22.01.1992
(73) Patentinhaber: BASF Aktiengesellschaft, 67063 Ludwigshafen (DE)
(72) Erfinder: Weiss, Franz-Josef, Dr., W-6708 Neuhofen (DE); Fuchs, Hugo, Dr., W-6700 Ludwigshafen (DE)

(56) Entgegenhaltungen:
- EP-A- 0 193 889
- US-A- 3 214 385
- US-A- 4 164 481
- US-A- 4 190 554

## Beschreibung

Es ist bekannt, Hydroxylammoniumsalze durch katalytische Reduktion von Stickstoffmonoxid mit Wasserstoff an edelmetallhaltigen, insbesondere platinhaltigen, Katalysatoren in saurem Medium herzustellen. Für die technische Durchführbarkeit des Verfahrens sind Aktivität, Selektivität und Lebensdauer des eingesetzten Katalysators von wesentlicher Bedeutung.

Bei diesem Verfahren wird üblicherweise ein Platinträgerkatalysator verwendet, der beim Einsatz im Reaktor über einen Zeitraum einiger Wochen merklich an Selektivität und Aktivität verliert. Deshalb muß der Katalysator periodisch regeneriert werden. Für die Standzeit des Katalysators, definiert als die Zeit, in der der Katalysator im Reaktor ununterbrochen in Betrieb bleibt, ist auch das Verfahren der jeweiligen Regenerierung von großem Einfluß. In der DE-PS 1 088 037 ist eine herkömmliche Regenerierung in saurem Medium und ihre Einwirkung auf die anschließenden Fahrperioden beschrieben.

Trotz periodischer Regenerierung verliert ein längere Zeit eingesetzter Katalysator langsam seine ursprünglichen katalytischen Eigenschaften; die Selektivität fällt ab und die Standzeiten werden kürzer. Häufigeres Regenerieren wird erforderlich.

Ursache dieser Langzeiteffekte ist im wesentlichen eine ansteigende Belegung des Katalysators mit vergiftend wirkenden Metallen. Diese werden über das saure Reaktionsmedium bei der Korrosion von Leitungs- und Kesselstahl auf den Katalysator übertragen. Bei der Regenerierung kann man die Metalle zwar weitgehend mit Königswasser ablösen, sie werden jedoch bei einer reduktiven Fällung des Platins wieder mit diesem größtenteils auf dem Katalysatorträger niedergeschlagen.

Zur Lösung dieses Problems wird in der EP-A 193 889 ein Verfahren vorgeschlagen, bei dem die störenden Metalle durch ein selektives Fällungsreagenz gefällt und somit entfernt werden. Es ist leicht ersichtlich, daß dies einen zusätzlichen Verfahrensschritt bedeutet.

Es war daher die Aufgabe gestellt, ein Verfahren zur Wiederherstellung der ursprünglichen katalytischen Eigenschaften von länger eingesetzten Edelmetallträgerkatalysatoren zu entwickeln, die bei der Herstellung von Hydroxylammoniumsalzen durch katalytische Reduktion von Stickstoffmonoxid mit Wasserstoff in wäßrigen Lösungen von Mineralsäuren verwendet werden.

Gegenstand der Erfindung ist ein Verfahren zur Regenerierung von Edelmetallkatalysatoren, durch das die oben erwähnten Nachteile vermieden werden, wobei der Katalysator einer Behandlung mit einer alkalischen wäßrigen Lösung mit einem pH-Wert oberhalb 9 unterworfen wird.

Das Verfahren eignet sich prinzipiell für alle bei der Hydroxylaminsynthese verwendeten Edelmetallkatalysatoren, die die Reduktion von Stickstoffmonoxid mit Wasserstoff katalysieren, insbesondere jedoch für Platinkatalysatoren auf den üblichen Trägern (z.B. auf Graphit).

Derartige Katalysatoren sind dem Fachmann bekannt, so daß sich nähere Angaben hierzu erübrigen.

Als alkalische wäßrige Lösungen eignen sich prinzipell alle Lösungen mit einem pH-Wert von mehr als 9, vorzugsweise mehr als 10. Wegen der wirtschaftlichen Vorteile werden die Hydroxide der Alkali- und Erdalkalimetalle sowie die Salze dieser Metalle mit schwachen Säuren, z.B. die Carbonate, bevorzugt. Insbesondere sind wäßrige Lösungen von NaOH und Na₂CO₃ zu erwähnen, da diese in großem Umfang zur Verfügung stehen.

Die Konzentration der wäßrigen Lösungen ist an sich nicht kritisch, liegt jedoch im allgemeinen im Bereich von 1 Gew.% bis zur Sättigungskonzentration, vorzugsweise von 2 bis 20 Gew.%.

Die Temperatur und die Zeit der Behandlung des Katalysators sind abhängig von der Konzentration der wäßrigen Lösungen; im allgemeinen muß die Zeit verlängert bzw. die Temperatur erhöht werden, wenn die Konzentration verringert wird.

Ganz allgemein liegen die Behandlungszeiten im Bereich von 1 min bis 12 Stunden, vorzugsweise 10 min bis 3 Stunden, bei Temperaturen im Bereich von 15 bis 100°C, vorzugsweise 20 bis 50°C. Besonders bevorzugt wird bei Raumtemperatur gearbeitet.

Nach der Behandlung mit der alkalischen wäßrigen Lösung wird diese aus dem Katalysator vorzugsweise durch Waschen mit Wasser oder insbesondere mit einer verdünnten Mineralsäure entfernt. Anschließend wird vorzugsweise mit Wasser bis zur neutralen Reaktion gewaschen.

Der so erhaltene regenerierte Katalysator kann direkt wieder bei der katalytischen Reduktion von Stickstoffmonoxid mit Wasserstoff zu Hydroxylamin eingesetzt werden.

Bei dem erfindungsgemäßen Verfahren findet keine Ablösung des Edelmetalls, insbesondere Platin, vom Träger statt, während dies bei der bekannten Regenerierung in sauren Lösungen der Fall ist. Dadurch entfällt auch die Notwendigkeit des Wiederaufbringens des Edelmetalls auf den Träger, was einen entscheidenden Vorteil darstellt.

Aktivität und Selektivität der nach dem erfindungsgemäßen Verfahren regenerierten Katalysatoren sind denen herkömmlich regenerierter Katalysatoren zumindest gleichwertig, häufig sogar noch höher.

Im folgenden beziehen sich alle Volumina für den gasförmigen Zustand auf eine Temperatur von 0°C und einen Druck von 1013 mbar.

### Beispiel 1

500 g (als Trockensubstanz berechnet) eines feuchten Hydroxylamin-Katalysators (Platinmetall auf Graphit als Träger) wurden in eine Rührapparatur gegeben und mit 800 g 4 gew.%iger Natriumhydroxidlösung bei 25°C eine Stunde gerührt. Danach wurde die Natronlauge über eine Glasfilternutsche abfiltriert, der Filterkuchen zweimal mit Wasser und einmal mit 10 gew.%iger H₂SO₄ gewaschen und anschließend mit Wasser bis zur neutralen Reaktion gespült.

200 g (Trockensubstanz) des so behandelten Katalysators wurden in 5000 ml 20 gew.%iger H₂SO₄ suspendiert und anschließend der Katalysator mit Wasserstoff bei 40°C aktiviert.

Anschließend wurden 250 l/h eines Gemischs aus 66 Vol.% H₂ (99,9 %ig) und 34 Vol.% NO (99,5 %ig) in die hergestellte Katalysatorsuspension eingeleitet. Die Reaktionstemperatur betrug 40 bis 41°C.

Nach Einleitung von 1380 l des NO/H₂-Gasgemischs wurden 5350 ml einer Lösung mit folgender Zusammensetzung erhalten:
22,5 g/l freie H₂SO₄
104,8 g/l NH₂OH (als NH₃OH)₂SO₄)
6,2 g/l NH₃ (als NH₄HSO₄)

Die Gesamt-Abgasmenge betrug 258 l, wobei das Abgas folgende Zusammensetzung aufwies:
79,5 Vol.% H₂
18,3 Vol.% NO
2,2 Vol.% N₂O

Die Selektivitäten und Raum-Zeit-Ausbeuten ergeben sich durch Auswertung der Meßergebnisse wie folgt:
Selektivität
87,4 % zu NH₂OH
10,0 % zu NH₃
2,6 % zu N₂O
Raum-Zeit-Ausbeute
0,691 Mol/l RR_{fl}·h, bezogen auf NO-Umsatz
0,604 Mol/l RR_{fl}·h, bezogen auf gebildetes NH₂OH

(Unter RR_{fl} wird in der vorstehenden Dimensionsangabe das flüssige Reaktionsvolumen verstanden. Da im Verlauf der Reaktion eine Volumenzunahme eintritt (von 5000 auf 5350 ml) wurde für die Berechnung der Mittelwert verwendet.)

### Vergleichsbeispiel

640 g (als Trockensubstanz berechnet) eines gebrauchten Hydroxylamin-Katalysators entsprechend Beispiel 1 wurden in 500 ml Wasser und 100 ml Königswasser (einer Mischung aus konz. Salzsäure und konz. Salpetersäure) suspendiert und über Nacht bei 80°C gerührt. Am nächsten Tag wurde mit 400 ml Wasser verdünnt, auf 30°C abgekühlt, mit Soda ein pH-Wert von 3,0 eingestellt und schließlich mit Natriumacetat die Lösung gepuffert. Danach wurde Na₂S₂O₄-Lösung zugegeben, bis Pt⁴⁺ zu Pt²⁺ reduziert war und das so erhaltene Pt wurde mit 100 ml 99 gew.%iger HCOOH wieder auf dem Graphit-Träger niedergeschlagen.

Von dem so behandelten Katalysator wurden 200 g (als Trockensubstanz berechnet) in 5000 ml 20 gew.%iger H₂SO₄ suspendiert und der Katalysator mit H₂ bei 40°C aktiviert. Anschließend wurden 274 l/h eines Gemischs aus 66 Vol.% H₂ (99,9 %ig) und 34 Vol.% NO (99,5 %ig) in die Suspension eingeleitet.

Nach Einleitung von insgesamt 1348 l des obigen Gasgemischs wurden 5290 ml einer Lösung folgender Zusammensetzung erhalten:
24,7 g/l freie H₂SO₄
96,5 g/l NH₂OH (als (NH₃OH)₂SO₄)
8,9 g/l NH₃ (als NH₄HSO₄).

Die Gesamt-Abgasmenge betrug 274 Liter (l) folgender Zusammensetzung:
78,1 Vol.% H₂
19,2 Vol.% NO
2,7 Vol.% N₂O

Aus diesen Ergebnissen lassen sich folgende Werte für die Selektivität und Raum-Zeit-Ausbeute berechnen:
Selektivität:
81,9 % zu NH₂OH
14,7 % zu NH₃
3,4 % zu N₂O
Raum-Zeit-Ausbeute:
0,593 Mol/l RR_{fl}·h, bezogen auf NO-Umsatz (Verbrauch)
0,485 Mol/l RR_{fl}·h, bezogen auf gebildetes NH₂OH.

## Patentansprüche

1. Verfahren zur Regenerierung von Edelmetallkatalysatoren, die bei der katalytischen Reduktion von Stickstoffmonoxid mit Wasserstoff eingesetzt werden, dadurch gekennzeichnet, daß man die Voriständig oder teilweise inaktivierten Edelmetallkatalysatoren mit einer alkalischen wäßrigen Lösung mit einem pH-Wert oberhalb 9 behandelt.

2. Verfahren nach Anspruch 1, dadurch gekennzeichnet, daß man als alkalische wäßrige Lösung eine Alkalihydroxid- und/oder Alkalicarbonat-Lösung einsetzt.

## Claims

1. A process for the regeneration of noble-metal catalysts employed in the catalytic reduction of nitrogen monoxide using hydrogen, which comprises treating the fully or partially deactivated noble-metal catalysts with an alkaline aqueous solution having a pH of above 9.

2. A process as claimed in claim 1, wherein the alkaline aqueous solution employed is an alkali metal hydroxide solution and/or an alkali metal carbonate solution.

## Revendications

1. Procédé de régénération de catalyseurs à base de métaux nobles, que l'on utilise en vue de la réduction catalytique du monoxyde d'azote avec de l'hydrogène, caractérisé en ce que l'on traite les catalyseurs à base de métaux nobles totalement ou partiellement inactivés, par une solution aqueuse alcaline qui possède un pH supérieur à 9.

2. Procédé suivant la revendication 1, caractérisé en ce que l'on utilise une solution d'un hydroxyde de métal alcalin et/ou d'un carbonate de métal alcalin à titre de solution aqueuse alcaline.
